# EUROPÄISCHE PATENTSCHRIFT

(11) **EP 2 927 528 B1**
(45) Veröffentlichungstag und Bekanntmachung des Hinweises auf die Patenterteilung: **06.05.2020**
(21) Anmeldenummer: 15159545.1
(22) Anmeldetag: 18.03.2015
(51) Int. Cl.: F16D 28/00, F16D 25/08, F16D 23/12

(54) **KUPPLUNGSPEDALBLOCK**
CLUTCH PEDAL BLOCK
BLOC DE PÉDALE D'EMBRAYAGE

(30) Priorität: 31.03.2014 DE 102014206065
(43) Veröffentlichungstag der Anmeldung: 07.10.2015
(73) Patentinhaber: Schaeffler Technologies AG & Co. KG, 91074 Herzogenaurach (DE)
(72) Erfinder: Honselmann, Sebastian, 77886 Lauf (DE)

(56) Entgegenhaltungen:
- DE-A1- 19 857 707
- DE-A1-102013 205 237
- GB-A- 2 236 153

## Beschreibung

Die Erfindung betrifft einen Kupplungspedalblock, mit dessen Hilfe die Bewegung eines fussbetätigten Kupplungspedals in einen Betätigungsdruck zum Betätigen einer Kupplung zum Kuppeln einer Antriebswelle eines Kraftfahrzeugmotors mit mindestens einer Getriebeeingangswelle eines Kraftfahrzeuggetriebes umgesetzt werden kann.

Ein üblicher Kupplungspedalblock für ein Handschaltgetriebe weist einen Geberzylinder und einen in dem Geberzylinder axial geführten Geberkolben auf, wobei der Geberkolben über ein Koppelelement starr mit einem Kupplungspedal verbunden ist. Wenn der Fahrer einen Kupplungsvorgang einleiten möchte, beispielsweise um in einen anderen Getriebegang zu schalten, kann der Fahrer das Kupplungspedal treten, wodurch der Geberkolben in den Geberzylinder hineingedrückt wird, um einen entsprechenden Betätigungsdruck für die Kupplung aufzubauen.

Aus der DE 198 57 707 A1 ist ein Kraftfahrzeug mit einer Kompensationseinrichtung bspw. zur Vermeidung und/oder Begrenzung und/oder Kompensation einer selbstinitiierten, ungesteuerten Kupplungsbetätigung beschrieben.

In der DE 10 2013 205237 A1 ist ein Aktorsystem zur hydraulischen Betätigung einer Kupplung in einem Antriebsstrang eines Kraftfahrzeugs beschrieben. Der Aktor umfasst bevorzugterweise einen Spindeltrieb zur Umwandlung einer rotatorischen in eine translatorische Stellung.

Zur Erhöhung des Fahrkomforts ist es bekannt die Kupplung automatisch zu betätigen, indem der Kupplungspedalblock weggelassen wird und ein Automatikgetriebe für den Antriebsstrang des Kraftfahrzeugs vorgesehen wird. Jedoch kann es vom Fahrer gewünscht sein erforderlichenfalls selber zu kuppeln und/oder selber zu schalten und dies nicht einem Automatiksystem zu überlassen. Aus der GB 2 236 153 A) ist ein Aktorsystem mit den Merkmalen des Oberbegriffs des Anspruchs 1 bekannt.

Es ist die Aufgabe der Erfindung Maßnahmen aufzuzeigen, die ein komfortables Schalten eines Handschaltgetriebes ermöglichen ohne dem Fahrer des Kraftfahrzeugs die Möglichkeit zum eigenen Eingreifen zu nehmen.

Die Lösung der Aufgabe erfolgt erfindungsgemäß durch einen Kupplungspedalblock mit den Merkmalen des Anspruchs 1. Bevorzugte Ausgestaltungen der Erfindung sind in den Unteransprüchen angegeben, die jeweils einzeln oder in Kombination einen Aspekt der Erfindung darstellen können.

Erfindungsgemäß ist ein Kupplungspedalblock zum Betätigen einer Kupplung zum Kuppeln einer Antriebswelle eines Kraftfahrzeugmotors mit mindestens einer Getriebeeingangswelle eines Kraftfahrzeuggetriebes, vorgesehen mit einem Geberzylinder zur Aufbringung eines hydraulischen und/oder pneumatischen Betätigungsdrucks zum Betätigen der Kupplung, einem in dem Geberzylinder geführten Geberkolben, wobei der Geberkolben ein Koppelelement zum Ankoppeln eines fussbetätigten Kupplungspedals aufweist, und einem Automatikaktor zum Verlagern des Geberkolbens in dem Geberzylinder.

Mit Hilfe des Automatikaktors kann bei einem Handschaltgetriebe die Funktionsweise eines Automatikgetriebes abgebildet werden. Der Automatikaktor kann in entsprechenden beispielsweise von einer Motor- und/oder Getriebesteuerung detektierten Situationen ein Betätigen der Kupplung einleiten. Beispielsweise kann infolge einer an einem Schaltknüppel angreifenden Kraft der Hand des Fahrers ein Schaltwunsch detektiert werden, infolgedessen der Automatikaktor automatisch die Kupplung öffnet, um eine Beschädigung des Kraftfahrzeuggetriebes zu vermeiden. Ferner kann beispielsweise bei einer detektierten zu niedrigen Drehzahl der Automatikaktor automatisch die Kupplung öffnen, um ein Abwürgen des Kraftfahrzeugmotors zu vermeiden. Ferner kann nach einer individuell eingeschalteten Fahrstrategie, beispielweise ein besonders verbrauchsarmer Betrieb, der Automatikaktor unterstützend die am besten geeigneten Schaltpunkte vorgeben und die Kupplung automatisch betätigen. Ebenfalls ist es möglich, dass der Fahrer wahlweise zwischen einem Automatikmodus, in dem mit Hilfe des an dem Geberkolben angreifenden Automatikaktors ein automatisches Schalten des Kraftfahrzeuggetriebes erfolgt, und einem Fussbetätigungsmodus, in dem der Automatikaktor deaktiviert ist und nur der Fahrer ein Betätigen der Kupplung vornehmen kann, wunschgemäß wechseln kann. Dadurch kann das Kraftfahrzeug sowohl für Fahrer, die ein Handschaltgetriebe gewohnt sind, als auch für Fahrer, die ein Automatikgetriebe gewohnt sind, komfortabel gefahren werden. Gleichzeitig kann der Fahrer unabhängig von dem Automatikaktor selber die Kupplung betätigen, indem der Fahrer durch ein Treten des Kupplungspedals an dem Koppelelement des Geberkolbens angreift und dadurch die Kupplung betätigt. Der Fahrer kann dadurch trotz des vorgesehenen Automatikaktors bei Bedarf selber kuppeln und/oder selber schalten und in die Schaltstrategie des Kraftfahrzeugs wunschgemäß eingreifen. Hierbei kann der Fahrer beispielsweise eine Betätigung beziehungsweise eine nicht erfolgte Betätigung der Kupplung durch den Automatikaktor überstimmen ("overrule"), so dass bei widersprüchlichen Aktionen die Vorgehensweise des Fahrers priorisiert ist. Wenn der Fahrer ein komfortables Schalten ohne Treten des Kupplungspedals wünscht, kann der Automatikaktor die Kupplung automatisch betätigen und gegebenenfalls einen Schaltvorgang einleiten, wobei dem Fahrer gleichzeitig die Möglichkeit offengehalten wird durch ein manuelles Treten des Kupplungspedals unabhängig vom Automatikaktor die Kupplung zu betätigen, so dass ein komfortables Schalten eines Handschaltgetriebes ermöglicht ist ohne dem Fahrer des Kraftfahrzeugs die Möglichkeit zum eigenen Eingreifen zu nehmen.

In dem Geberzylinder kann insbesondere ein Fluid, vorzugsweise ein Hydrauliköl, von dem Geberkolben komprimiert werden, um einen entsprechend hohen Betätigungsdruck aufzubauen. Der Geberzylinder kann mit einem Betätigungssystem hydraulisch verbunden sein, wobei das Betätigungssystem insbesondere mindestens einen Nehmerzylinder aufweist, in dem ein Betätigungskolben axial geführt ist. Bei einem ansteigenden Druck im Geberzylinder kann auch der Druck im Nehmerzylinder ansteigen und dadurch den Betätigungskolben ausfahren, der direkt oder indirekt, beispielsweise über eine als Tellerfeder ausgestaltete Hebelfeder, an einer Anpressplatte einer Reibungskupplung angreifen kann, um eine mit einer Getriebeeingangswelle drehfest verbundene Kupplungsscheibe zu verpressen. Der Geberzylinder kann insbesondere eine Rückstellfeder aufweisen, die bei einem Einfahren des Geberkolbens in den Geberzylinder in einer Betätigungsrichtung eine Rückstellkraft bereitstellt, um den Geberkolben bei einem Nachlassen oder Wegfallen der vom Fahrer oder vom Automatikaktor in Betätigungsrichtung aufgeprägten Verlagerungskraft entgegen der Betätigungsrichtung in eine einem unbetätigten Zustand entsprechende Kolbenausgangsstellung zurückzuverlagern. An dem Koppelelement des Geberkolbens kann das Kupplungspedal direkt oder indirekt angreifen. Durch das Koppelelement kann insbesondere eine Schwenkbewegung des Kupplungspedals in eine Linearbewegung des Geberkolbens in axialer Richtung des Geberzylinders gewandelt werden.

Vorzugsweise ist mit dem Kupplungspedal eine Pedalrückzugsfeder verbunden, die bei einem Treten des Kupplungspedals eine Rückzugskraft bereitstellt, um das Kupplungspedal bei einer nachlassenden oder wegfallenden Tretkraft in eine definierte Ausgangsstellung automatisch zurückzubewegen. Dadurch kann das Kupplungspedal auch dann in dieser Ausgangsstellung verbleiben, wenn der Geberkolben von dem Automatikaktor verlagert wird und das Koppelelement nur lose an dem Kupplungspedal angebunden ist. Falls dies nicht gewünscht ist, kann das Koppelelement auch fest mit dem Kupplungspedal verbunden werden, so dass bei einer Verlagerung des Geberkolbens durch den Automatikaktor auch das Kupplungspedal gegebenenfalls gegen die Rückzugskraft der Pedalrückzugsfeder mit verschwenkt werden kann.

Insbesondere ist der Automatikaktor elektromotorisch betreibbar. Der Automatikaktor kann vorzugsweise einen Elektromotor, beispielsweise einen Servomotor, aufweisen, der insbesondere von einer Kraftfahrzeugbatterie des Kraftfahrzeugs mit elektrischer Energie versorgt werden kann. Der Automatikaktor kann dadurch im Bedarfsfall leicht mit ausreichender Energie versorgt werden, um den Geberkolben zum Aufbau eines Betätigungsdrucks in den Geberzylinder einfahren zu können. Ferner kann der Automatikaktor durch den Elektromotor schnell ansprechbar ausgestaltet sein.

Vorzugsweise weist der Automatikaktor einen an dem Geberkolben angreifenden Spindeltrieb auf. Der Spindeltrieb ist insbesondere als Kugelumlaufspindel ausgestaltet, wodurch eine geringe Reibung und ein hoher Wirkungsgrad erreicht werden kann. Der Spindeltrieb kann insbesondere eine Spindel aufweisen, die beispielsweise von einem Elektromotor verdreht werden kann. Auf der Spindel kann eine Spindelmutter aufgeschraubt sein, die durch eine Drehung der Spindel in axialer Richtung verlagert werden kann. Die Spindelmutter kann einen im Wesentlichen quer zur Axialrichtung abstehenden Mitnehmer, beispielweise eine Mitnehmerklinke oder Mitnehmerfahne, aufweisen, der an einem korrespondierenden Kolbenanschlag des Geberkolbens anschlagen kann, um den Geberkolben, insbesondere ausschließlich in Betätigungsrichtung, mitnehmen zu können.

Es ist vorgesehen, dass der Automatikaktor bei einer Bewegung in Betätigungsrichtung zum Druckaufbau in dem Geberzylinder an dem Geberkolben anschlägt und bei einer Bewegung entgegen der Betätigungsrichtung relativ zum Geberkolben axial bewegbar ist. Dadurch kann der Automatikaktor nur in Betätigungsrichtung eine Kraft auf den Geberkolben ausüben. Wenn der Geberkolben durch ein Treten des Kupplungspedals in Betätigungsrichtung axial verlagert wird, braucht der Automatikaktor nicht mitbewegt werden, so dass unnötige Schleppmomente vermieden sind. Insbesondere kann ein Mitnehmer des Automatikaktors bei einer Betätigung der Kupplung durch ein Treten des Kupplungspedals von einem korrespondierenden Kolbenanschlag des Geberkolbens abheben und dadurch relativ zum Geberkolben verlagert werden. Der Fahrer kann dadurch ein ausbleibendes Betätigen der Kupplung manuell overrulen, indem er das Kupplungspedal betätigt. Der Automatikaktor kann dadurch von dem Geberkolben entkoppelt werden, so dass der Automatikaktor das manuelle Betätigen der Kupplung durch den Fahrer nicht beeinträchtigt.

Insbesondere ist der Automatikaktor von dem Geberkolben bei einer Bewegung des Geberkolbens entgegen der Betätigungsrichtung in eine einem unbetätigten Zustand entsprechende Aktorausgangsstellung mitnehmbar, wobei insbesondere eine Selbsthemmkraft des Automatikaktors im unbetätigten Zustand des Automatikaktors geringer als eine auf den Geberkolben aufgebrachte Rückstellkraft zum Verlagern des Geberkolbens in eine dem unbetätigten Zustand entsprechende Kolbenausgangsstellung ist. Beispielsweise weist der Geberzylinder eine Rückstellfeder auf, die bei einem Einfahren des Geberkolbens in den Geberzylinder zumindest einen Anteil der Rückstellkraft aufbaut. Zudem kann der im Geberzylinder aufgebaute Betätigungsdruck einen Anteil der Rückstellkraft bereitstellen. Im ausgeschalteten Zustand des Automatikaktors kann der Automatikaktor dadurch automatisch in seine Aktorausgangsstellung zurückbewegt werden, ohne dass es hierzu erforderlich ist den Automatikaktor anzusteuern und Energie einzusetzen. Insbesondere in einem Fehlerfall, wenn beispielsweise die Stromversorgung des Automatikaktors ausfällt, kann verhindert werden, dass die Kupplung permanent geöffnet bleibt, obwohl zumindest noch ein manuelles Betätigen der Kupplung mit Hilfe des Kupplungspedals möglich ist.

Vorzugsweise lässt das Koppelelement bei einer Bewegung des Kupplungspedals in Betätigungsrichtung zum Druckaufbau in dem Geberzylinder ein Anschlagen des Kupplungspedals an dem Koppelelement zu, wobei das Koppelelement bei einer Bewegung des Kupplungspedals entgegen der Betätigungsrichtung ein Abheben des Kupplungspedals von dem Koppelelement zulässt. Bei einem Treten des Kupplungspedals kann das Kupplungspedal im Wesentlichen unabhängig von der Relativlage des Kupplungspedals zum Geberkolben nach einem entsprechend großen Schwenkwinkel an dem Koppelelement anschlagen, wodurch der Fahrer beispielsweise die Kupplung schneller öffnen und/oder länger offenhalten kann, als dies von dem Automatikaktor vorgesehen ist. Gleichzeitig ist es prinzipiell möglich, dass das Kupplungspedal von dem Koppelelement des Geberkolbens abhebt, wenn der Geberkolben von dem Automatikaktor verlagert wird. Dadurch ist es möglich, dass das Kupplungspedal in seiner Position verbleibt, während der Automatikaktor den Geberkolben in den Geberzylinder einfährt.

Besonders bevorzugt ist das Koppelelement, insbesondere über eine Koppelfeder, mit dem Kupplungspedal bewegungsgekoppelt, wobei insbesondere das Koppelelement mit dem Kupplungspedal starr gekoppelt ist. Mit Hilfe der Koppelfeder kann das Kupplungspedal zumindest teilweise der Bewegung des Geberkolbens bei einer Betätigung mit Hilfe des Automatikaktors nachgeführt werden. Der Fahrer kann dadurch ein automatisches Feedback erhalten, wenn sein Fuß auf dem Kupplungspedal ruht. Der Schwenkwinkel des Kupplungspedals bei einer bestimmten Verlagerung des Geberkolbens muss hierbei nicht zwangsläufig dem Schwenkwinkel des Kupplungspedals bei der selben Verlagerung des Geberkolbens bei einem manuellen Betätigen entsprechen, so dass ein gewisser Totwinkel vorgesehen sein kann, der bei einem manuellen Betätigen erst überwunden werden muss, um eine Kraft auf den Geberkolben ausüben zu können. Alternativ kann das Kupplungspedal starr mit dem Koppelelement verbunden werden, so dass die Winkelstellung des Kupplungspedals immer genau dem Ausmaß der Verlagerung des Geberkolbens entspricht.

Insbesondere sind ein Kolbenwegsensor zur Detektion der axialen Relativlage des Geberkolbens zum Geberzylinder und ein Aktorwegsensor zur Detektion der axialen Relativlage des Automatikaktors relativ zum Geberzylinder und/oder zum Geberkolben vorgesehen. Der Aktorwegsensor kann insbesondere auch Teil eines Servomotors sein, so dass über die Messung des Drehwegs des Rotors des Servomotors der Verlagerungsweg des Automatikaktors, insbesondere einer Spindelmutter des Automatikaktors, gemessen werden kann. Mit Hilfe des Kolbenwegsensors und des Aktorwegsensor kann insbesondere im Vorhinein berechnet werden, wann der Automatikaktor an dem Geberkolben anschlagen kann, um beispielsweise einen möglichst sanften und geräuscharmen Kontakt durch eine geeignete Steuerung des Automatikaktors zu erreichen. Ferner lassen sich dadurch leicht alle üblichen Komfort- und/oder Effizienzmaßnahmen eines klassischen Handschaltgetriebes realisieren.

Vorzugsweise ist der Automatikaktor mit einem Schaltelement zum manuellen Aktivieren und/oder Deaktivieren des Automatikaktors verbunden. Dies ermöglicht es dem Fahrer eine Abbildung des Kupplungskomforts eines Automatikgetriebes durch den Automatikaktor bewusst vorzusehen oder auszuschalten. Das Schaltelement kann hierzu beispielsweise in einem von der Hand des Fahrers betätigbaren Steuerfeld vorgesehen sein und/oder von einer Bordelektronik des Kraftfahrzeugs betätigt werden. Zusätzlich oder alternativ kann das Schaltelement auch an einer Stelle positioniert sein, wo es bei einer Fehlbedienung des Fahrers automatisch betätigt wird. Beispielsweise kann das Schaltelement in einer Schaltgasse eines Schaltknüppels vorgesehen sein, so dass das Schaltelement automatisch betätigt wird, wenn der Fahrer den Schaltknüppel zum Gangwechsel in eine Position bewegen will ohne vorher das Kupplungspedal getreten zu haben. Dadurch kann insbesondere eine Handschaltfunktionalität mit einer manuellen Wahl der Schaltpunkte erreicht werden, während der Automatikaktor dem Fahrer das Betätigen der Kupplung abnimmt. Da der Fahrer bei einem Wechsel des Getriebegangs nicht das Kupplungspedal betätigen muss, ist dadurch der Schaltkomfort für den Fahrer erhöht.

Besonders bevorzugt ist der Automatikaktor im Wesentlichen achsparallel zum Geberkolben angeordnet. Dies erleichtert die Anbindung des Automatikaktors an den Geberkolben über einen seitlich abstehenden Mitnehmer des Automatikaktors und einen seitlich abstehenden Kolbenanschlag des Geberkolbens.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische perspektivische Ansicht eines Kupplungspedalblocks,
Fig. 2: eine schematische Schnittansicht des Kupplungspedalblocks aus Fig. 1 und
Fig. 3: eine schematische perspektivische Schnittansicht des Kupplungspedalblocks aus Fig. 1.

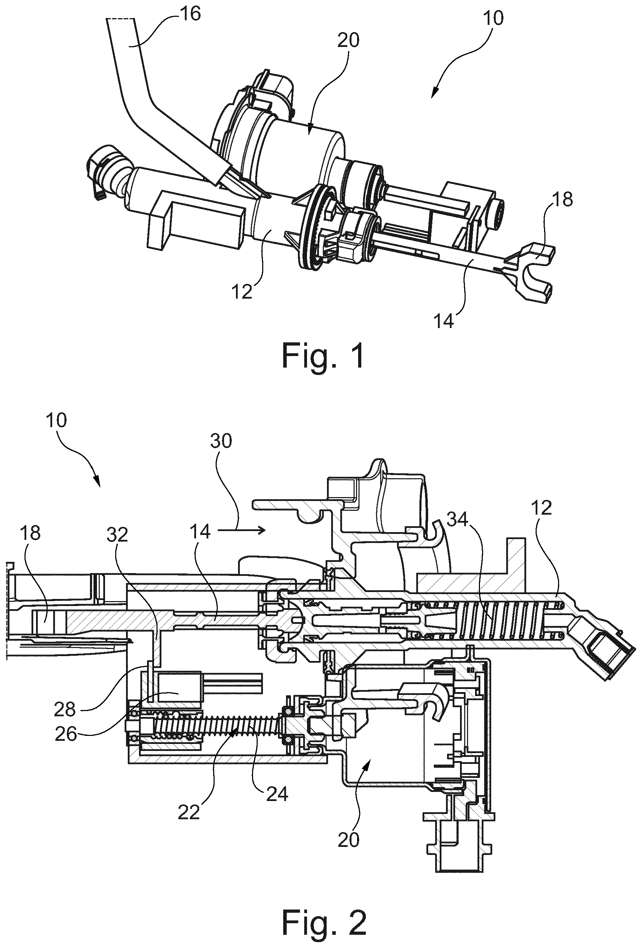

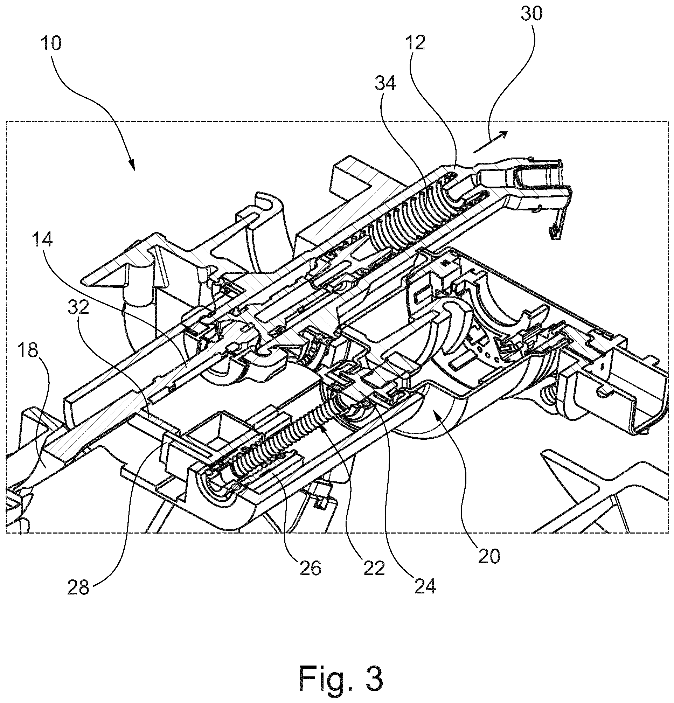

Der in Fig. 1, Fig. 2 und Fig. 3 dargestellte Kupplungspedalblock 10 weist einen Geberzylinder 12 auf, in dem ein Geberkolben 14 axial geführt ist, um bei einem Einfahren des Geberkolbens 14 in den Geberzylinder 12 einen Betätigungsdruck aufzubauen, mit dem ein über eine Hydraulikleitung 16 angeschlossenes Betätigungssystem zum Öffnen und/oder Schließen einer Kupplung zum Kuppeln einer Antriebswelle eines Kraftfahrzeugmotors mit mindestens einer Getriebeeingangswelle eines Kraftfahrzeuggetriebes betätigt werden kann. Der Geberkolben 14 weist ein Koppelelement 18 auf, mit dem direkt oder indirekt ein Kupplungspedal angebunden werden kann. Wenn das Kupplungspedal von einem Fahrer eines Kraftfahrzeugs getreten wird, kann über das Koppelelement 18 eine Kraft eingeleitet werden, um den Geberkolben 14 in den Geberzylinder 12 einzufahren.

Zusätzlich ist ein elektromotorisch antreibbarer Automatikaktor 20 vorgesehen, der ebenfalls an dem Geberkolben 14 angreifen kann, um den Geberkolben 14 in den Geberzylinder 12 einzufahren. Der Automatikaktor 20 weist einen von einem Elektromotor antreibbaren Spindeltrieb 22 auf. Der Spindeltrieb 22 weist eine von dem Elektromotor verdrehbare Spindel 24 auf, auf der eine Spindelmutter 26 aufgeschraubt ist. Die Spindelmutter 26 weist einen seitlich abstehenden Mitnehmer 28 auf, der bei einer axialen Verlagerung der Spindelmutter 26 in eine Betätigungsrichtung 30 an einem seitlich abstehenden Kolbenanschlag 32 des Geberkolbens 14 anschlagen kann. Der Geberkolben 14 kann dadurch sowohl bei einem Treten des Kupplungspedals durch eine an dem Koppelelement 18 eingeleitete Kraft als auch bei einem Betätigen des Automatikaktor 20 durch eine an dem Kolbenanschlag 32 eingeleitete Kraft in den Geberzylinder 12 eingefahren werden. Wenn die entsprechende Kraft nachlässt oder wegfällt kann eine in dem Geberzylinder 12 vorgesehene Rückstellfeder 34 eine ausreichende Rückstellkraft bereitstellen, um den Geberkolben 14 in seine Kolbenausgangsstellung zurückzubewegen und hierbei die Spindelmutter 26 des Automatikaktors 20 in ihre Aktorausgangsstellung mitzunehmen. Insbesondere kann das Koppelelement 18 von dem Kupplungspedal abheben, wenn der Automatikaktor 20 den Geberkolben 14 in den Geberzylinder 12 einfährt. Ferner kann der Mitnehmer 28 des Automatikaktors 20 von dem Kolbenanschlag 32 abheben, wenn der Geberkolben 14 manuell mit Hilfe des Kupplungspedals in den Geberzylinder 12 einfährt

### Bezuaszeichenliste

- 10: Kupplungspedalblock
- 12: Geberzylinder
- 14: Geberkolben
- 16: Hydraulikleitung
- 18: Koppelelement
- 20: Automatikaktor
- 22: Spindeltrieb
- 24: Spindel
- 26: Spindelmutter
- 28: Mitnehmer
- 30: Betätigungsrichtung
- 32: Kolbenanschlag
- 34: Rückstellfeder

## Patentansprüche

1. Kupplungspedalblock zum Betätigen einer Kupplung zum Kuppeln einer Antriebswelle eines Kraftfahrzeugmotors mit mindestens einer Getriebeeingangswelle eines Kraftfahrzeuggetriebes, mit
einem Geberzylinder (12) zur Aufbringung eines hydraulischen und/oder pneumatischen Betätigungsdrucks zum Betätigen der Kupplung,
einem in dem Geberzylinder (12) geführten Geberkolben (14), wobei der Geberkolben (14) ein Koppelelement (18) zum Ankoppeln eines fussbetätigten Kupplungspedals aufweist, und
einem Automatikaktor (20) zum Verlagern des Geberkolbens (14) in dem Geberzylinder (12), **dadurch gekennzeichnet, dass** der Automatikaktor (20) von dem Geberkolben (14) bei einer Bewegung des Geberkolbens (14) entgegen der Betätigungsrichtung (30) in eine einem unbetätigten Zustand entsprechende Aktorausgangsstellung mitnehmbar ist, wobei insbesondere eine Selbsthemmkraft des Automatikaktors (20) im unbetätigten Zustand des Automatikaktors (20) geringer als eine auf den Geberkolben (14) aufgebrachte Rückstellkraft zum Verlagern des Geberkolbens (14) in eine dem unbetätigten Zustand entsprechende Kolbenausgangsstellung ist.

2. Kupplungspedalblock nach Anspruch 1 **dadurch gekennzeichnet, dass** der Automatikaktor (20) elektromotorisch betreibbar ist.

3. Kupplungspedalblock nach Anspruch 1 oder 2 **dadurch gekennzeichnet, dass** der Automatikaktor (20) einen an dem Geberkolben (14) angreifenden Spindeltrieb (22) aufweist.

4. Kupplungspedalblock nach einem der Ansprüche 1 bis 3 **dadurch gekennzeichnet, dass** der Automatikaktor (20) bei einer Bewegung in Betätigungsrichtung (30) zum Druckaufbau in dem Geberzylinder (12) an dem Geberkolben (14) anschlägt und bei einer Bewegung entgegen der Betätigungsrichtung (30) relativ zum Geberkolben (14) axial bewegbar ist.

5. Kupplungspedalblock nach einem der Ansprüche 1 bis 4 **dadurch gekennzeichnet, dass** das Koppelelement (18) bei einer Bewegung des Kupplungspedals in Betätigungsrichtung (30) zum Druckaufbau in dem Geberzylinder (12) ein Anschlagen des Kupplungspedals an dem Koppelelement (18) zulässt, wobei das Koppelelement (18) bei einer Bewegung des Kupplungspedals entgegen der Betätigungsrichtung (30) ein Abheben des Kupplungspedals von dem Koppelelement (18) zulässt.

6. Kupplungspedalblock nach einem der Ansprüche 1 bis 5 **dadurch gekennzeichnet, dass** das Koppelelement (18), insbesondere über eine Koppelfeder, mit dem Kupplungspedal bewegungsgekoppelt ist, wobei insbesondere das Koppelelement (18) mit dem Kupplungspedal starr gekoppelt ist.

7. Kupplungspedalblock nach einem der Ansprüche 1 bis 6 **dadurch gekennzeichnet, dass** ein Kolbenwegsensor zur Detektion der axialen Relativlage des Geberkolbens (14) zum Geberzylinder (12) und ein Aktorwegsensor zur Detektion der axialen Relativlage des Automatikaktors (20) relativ zum Geberzylinder (12) und/oder zum Geberkolben (14) vorgesehen sind.

8. Kupplungspedalblock nach einem der Ansprüche 1 bis 7 **dadurch gekennzeichnet, dass** der Automatikaktor (20) mit einem Schaltelement zum manuellen Aktivieren und/oder Deaktivieren des Automatikaktors (20) verbunden ist.

9. Kupplungspedalblock nach einem der Ansprüche 1 bis 8 **dadurch gekennzeichnet, dass** der Automatikaktor (20) im Wesentlichen achsparallel zum Geberkolben (14) angeordnet ist.

## Claims

1. A clutch pedal block for actuating a clutch for coupling a drive shaft of a motor vehicle engine having at least one transmission input shaft of a motor vehicle transmission, having
a master cylinder (12) for applying a hydraulic and/or pneumatic actuation pressure for actuating the clutch,
a master piston (14) guided in the master cylinder (12), wherein the master piston (14) has a coupling element (18) for coupling a foot-operated clutch pedal, and an automatic actuator (20) for displacing the master piston (14) in the master cylinder (12), **characterised in that** the automatic actuator (20) of the master piston (14), when the master piston (14) moves counter to the actuating direction (30), can be moved to an actuator output position corresponding to an unactuated state, wherein in particular a self-locking force of the automatic actuator (20) in the unactuated state of the automatic actuator (20) is less than a restoring force applied to the master piston (14) for displacing the master piston (14) into a piston output position corresponding to the unactuated state.

2. The clutch pedal block according to claim 1, **characterised in that** the automatic actuator (20) can be operated by an electric motor.

3. The clutch pedal block according to claim 1 or 2, **characterised in that** the automatic actuator (20) has a spindle drive (22) acting on the master piston (14).

4. The clutch pedal block according to one of claims 1 to 3, **characterised in that** the automatic actuator (20) strikes the master piston (14) when moving in the actuating direction (30) to build up pressure in the master cylinder (12) and when moving counter to the actuating direction (30) is axially movable relative to the master piston (14).

5. The clutch pedal block according to one of claims 1 to 4, **characterised in that** the coupling element (18) allows the clutch pedal to strike the coupling element (18) when the clutch pedal moves in the actuating direction (30) to build up pressure in the master cylinder (12), wherein the coupling element (18) allows the clutch pedal to be lifted off the coupling element (18) when the clutch pedal moves counter to the actuating direction (30).

6. The clutch pedal block according to one of claims 1 to 5, **characterised in that** the coupling element (18), in particular via a coupling spring, is motion-coupled to the clutch pedal, wherein in particular the coupling element (18) is rigidly coupled to the clutch pedal.

7. The clutch pedal block according to one of claims 1 to 6, **characterised in that** a piston travel sensor for detecting the relative axial position of the master piston (14) with respect to the master cylinder (12) and an actuator travel sensor for detecting the relative axial position of the automatic actuator (20) with respect to the master cylinder (12) and/or to the master piston (14) are provided.

8. The clutch pedal block according to one of claims 1 to 7, **characterised in that** the automatic actuator (20) is connected to a switching element for manual activation and/or deactivation of the automatic actuator (20).

9. The clutch pedal block according to one of claims 1 to 8, **characterised in that** the automatic actuator (20) is arranged substantially axially parallel to the master piston (14).

## Revendications

1. Bloc de pédale d'embrayage pour actionner un embrayage pour accoupler un arbre d'entraînement d'un moteur de véhicule automobile avec au moins un arbre d'entrée de transmission d'une transmission de véhicule automobile, comprenant un maître-cylindre (12) pour appliquer une pression d'actionnement hydraulique et/ou pneumatique pour actionner l'embrayage,
un maître-piston (14) guidé dans le maître-cylindre (12), le maître-piston (14) ayant un élément d'accouplement (18) pour accoupler une pédale d'embrayage actionnée par le pied et
un actionneur automatique (20) pour déplacer le maître-piston (14) dans le maître-cylindre (12), **caractérisé en ce que** l'actionneur automatique (20) peut être entraîné par le maître-piston (14) lorsque le maître-piston (14) se déplace dans une direction opposée à la direction d'actionnement (30) dans une position de départ d'actionneur correspondant à un état non actionné, en particulier une force d'auto-blocage de l'actionneur automatique (20) dans l'état non actionné de l'actionneur automatique (20) étant inférieure à une force de rappel appliquée au maître-piston (14) pour déplacer le maître-piston (14) dans une position de départ de piston correspondant à l'état non actionné.

2. Bloc de pédale d'embrayage selon la revendication 1, **caractérisé en ce qu'**un moteur électrique peut faire fonctionner l'actionneur automatique (20).

3. Bloc de pédale d'embrayage selon la revendication 1 ou 2, **caractérisé en ce que** l'actionneur automatique (20) présente un mécanisme à broche (22) agissant sur le maître-piston (14).

4. Bloc de pédale d'embrayage selon l'une des revendications 1 à 3, **caractérisé en ce que** l'actionneur automatique (20) frappe le maître-piston (14) lors d'un déplacement dans la direction d'actionnement (30) pour augmenter la pression dans le maître-cylindre (12) et peut se déplacer axialement lors d'un déplacement dans la direction opposée à la direction d'actionnement (30) par rapport au maître-piston (14).

5. Bloc de pédale d'embrayage selon l'une des revendications 1 à 4, **caractérisé en ce que** l'élément d'accouplement (18) permet à la pédale d'embrayage de heurter l'élément d'accouplement (18) lorsque la pédale d'embrayage se déplace dans la direction d'actionnement (30) pour augmenter la pression dans le maître-cylindre (12), l'élément d'accouplement (18) permettant de soulever la pédale d'embrayage de l'élément d'accouplement (18) lorsque la pédale d'embrayage se déplace dans la direction opposée à la direction d'actionnement (30).

6. Bloc de pédale d'embrayage selon l'une des revendications 1 à 5, **caractérisé en ce que** l'élément d'accouplement (18), en particulier par l'intermédiaire d'un ressort d'accouplement, est accouplé en mouvement à la pédale d'embrayage, en particulier l'élément d'accouplement (18) étant accouplé rigidement à la pédale d'embrayage.

7. Bloc de pédale d'embrayage selon l'une des revendications 1 à 6, **caractérisé en ce qu'**un capteur de course de piston sert à détecter la position relative axiale du maître-piston (14) par rapport au maître-cylindre (12) et un capteur de course d'actionneur sert à détecter la position relative axiale de l'actionneur automatique (20) par rapport au maître-cylindre (12) et/ou au maître-piston (14).

8. Bloc de pédale d'embrayage selon l'une des revendications 1 à 7, **caractérisé en ce que** l'actionneur automatique (20) est relié à un élément de commutation pour l'activation et/ou la désactivation manuelle de l'actionneur automatique (20).

9. Bloc de pédale d'embrayage selon l'une des revendications 1 à 8, **caractérisé en ce que** l'actionneur automatique (20) est disposé sensiblement parallèlement à l'axe par rapport au maître-piston (14).
